# EUROPEAN PATENT SPECIFICATION

(11) **EP 3 523 938 B1**
(45) Date of publication and mention of the grant of the patent: **31.07.2024**
(21) Application number: 17780090.1
(22) Date of filing: 04.10.2017
(51) Int. Cl.: H04W 4/00, H04L 65/1069, H04L 65/1108

(54) **A REAL TIME COMMUNICATION SYSTEM**
ECHTZEITKOMMUNIKATIONSSYSTEM
SYSTÈME DE COMMUNICATION EN TEMPS RÉEL

(30) Priority: 10.10.2016 DK PA201600609
(43) Date of publication of application: 14.08.2019
(73) Proprietor: GN Audio A/S, 2750 Ballerup (DK)
(72) Inventor: JEPSEN, Jesper Birk, DK-2750 Ballerup (DK); FREDERIKSEN, Morten, DK-2750 Ballerup (DK)
(74) Representative: GN Store Nord A/S
(86) International application number: PCT/EP2017/075271
(87) International publication number: WO 2018/069124

(56) References cited:
- US-A1- 2009 300 241
- US-A1- 2015 039 760

## Description

### FIELD

The present disclosure relates to a method and a real-time communication system. The system comprises a first computing device; a peripheral device; a connection component of the first computing device for connecting the first computing device and the peripheral device; a software for the peripheral device installed on the first computing device; a first internet browser installed on the first computing device, the first internet browser being configured for providing content in the form of video, audio, and/or data; an external computing system in communication with the first internet browser and with the software; and a user interface of the peripheral device.

### BACKGROUND

In real time communication (RTC) systems, a relatively new standard is named WebRTC and is defined by W3C, the World Wide Web Consortium. WebRTC enables peer to peer video, audio, and data communication between two web browsers via simple APIs (Application Program Interfaces) without the need to install plug-ins. WebRTC is inter alia adopted by the major browsers Firefox, Google Chrome and Opera. WebRTC has many advantages, but also some limitations compared to conventional IP communications such as Skype^{®}, which requires installation of a softphone client.

US2016112473A discloses a real-time communication method using WebRTC type technology between web browsers on an Internet type communications network, the method comprising: a first web browser of a first terminal associated with a first user previously loading (S20) a web application provided by an application server, the web application providing real-time communication functions between web browsers; and the first browser sending (S21) a call setup request, via the web application, to the application server, which call setup request includes an identifier of a user being called, referred to as the "second" user. The method is remarkable in that it further comprises steps of: determining (S22, S23, S24) an availability state of the second user for answering the call setup request; and automatically redirecting (S25) to a web address of a messaging service associated with the second user when the second user is not available.

US2015039760A discloses remotely controlling Web Real-Time Communications (WebRTC) client functionality via WebRTC data channels. In one embodiment, a method for remotely controlling WebRTC client functionality comprises establishing, by a first WebRTC client executing on a first computing device and a second WebRTC client executing on a second computing device, a WebRTC media channel between the first WebRTC client and the second WebRTC client. The method further comprises establishing, between the first WebRTC client and the second WebRTC client, a WebRTC data channel affiliated with the WebRTC media channel. The method also comprises receiving, by the second WebRTC client, a client control signal originating from the first WebRTC client via the WebRTC data channel. The method additionally comprises, responsive to receiving the client control signal via the WebRTC data channel, modifying a functionality associated with the second WebRTC client.

US2009300241A1 discloses a system, device, and method for virtually connecting a media device to a computing device. One embodiment comprises a method to operate a virtual media device in a computing device, wherein the virtual media device that is controlled by a remote media device. In this manner, a computing device may stream media data to and from the remote media device.

There is a need for an improved real time communication system and method.

### SUMMARY

The present invention is disclosed by the subject-matter of the independent claims.

Disclosed is a real-time communication system. The real time communication system comprises a first computing device. The real time communication system comprises a peripheral device. The real time communication system comprises a connection component of the first computing device for connecting the first computing device and the peripheral device. The real time communication system comprises a software for the peripheral device installed on the first computing device. The real time communication system comprises first internet browser installed on the first computing device. The first internet browser is configured for providing content in the form of video, audio, and/or data. The real time communication system comprises an external computing system in communication with the first internet browser and with the software. The real time communication system comprises a user interface of the peripheral device for generating control signals for controlling one or more functionalities in the first internet browser. The control signals are transmitted via the connection component, via the software, via the external computing system to the first internet browser thereby enabling control of the one or more functionalities in the first internet browser.

Also disclosed is a method for real-time communication in a system. The system comprising: a first computing device; a peripheral device; a connection component of the first computing device for connecting the first computing device and the peripheral device; a software for the peripheral device installed on the first computing device; a first internet browser installed on the first computing device, the first internet browser being configured for providing content in the form of video, audio, and/or data; an external computing system in communication with the first internet browser and with the software; and a user interface of the peripheral device. The method comprises generating control signals in the user interface for controlling one or more functionalities in the first internet browser, the control signals being transmitted via the connection component, via the software, via the external computing system to the first internet browser thereby enabling control of the one or more functionalities in the first internet browser.

RTC is an acronym for Real Time Communication. The relatively new standard within real time communication, named WebRTC, is defined by W3C, the World Wide Web Consortium. WebRTC enables peer to peer video, audio, and data communication between two web browsers via simple APIs (Application Program Interfaces) without the need to install plug-ins. WebRTC is inter alia adopted by the major browsers Firefox, Google Chrome and Opera. WebRTC has many advantages, but also some limitations compared to conventional IP communications such as Skype^{®}, which requires installation of a softphone client. For security reasons, Internet browsers are so-called sand-box programs, which have restricted access to the computing device it is running on. Audio in and out from the browser is possible in the sand-box environment. It is therefore possible to use the WebRTC enabled browsers for telecommunication between users. It is relatively easy to connect an external audio device such as a headset or speakerphone to the browser and communicate orally with each other. However, due to the sand-box environment, it is not possible to send control commands between the audio device and the Internet browser. The user can control the browser content (web page program) by means of the normal computer interface, such as keyboard, mouse or touchscreen. However, in many cases it would be more desirable to be able to use a user interface of the audio device itself for controlling the WebRTC functionality. For people working intensively with telecommunication, such as employees in cloud based contact centers etc., it is highly desirable that they are able to use the interface of a headset to control calls. The interface can be buttons on the headset itself, on a headset base or a separate control device, which can be provided between the headset and the computer.

Thus it is an advantage of the present system and method to provide improved usability to real time communication systems, such as using WebRTC softphones. WebRTC softphones run in browsers and make it easy to implement softphones directly in the browser without the need for installing a heavy softphone client on a PC. Due to security limitations in the PC's operating system (Windows, OSX; Linus), a WebRTC softphone running in a browser can only send and receive a limited set of commands directly to/from the headset's device driver. However, both the WebRTC softphone and the headset driver can communicate with the web. The invention utilizes this to use an external computing system, such as a cloud service, to connect a browser application (e.g. a WebRTC softphone) and a device driver (e.g. a Jabra headset driver) on the one and same PC.

It is an advantage of the present method and system that the real-time communication system according to the invention is characterised in an external computing system, such as a cloud service or server, that enables control of communication sessions via control signals sent from at least the first computing devices via a first external computing system channel, such as a cloud connection channel, which in parallel with the first Internet channel connects the first computing device with the cloud service. Thus, the security limitations of the Internet browser do not prevent the user from using the interface of a connected audio device, such as a headset or speakerphone, to control a browser softphone.

The real-time communication may be based on the WebRTC standard.

The control signals may comprise at least one of the following signals: accept incoming call, reject incoming call, volume up, volume down, mute microphone, unmute microphone.

The real time communication system comprises a first computing device. The first computing device may be a computer, such as a personal computer (PC), a tablet, a smart phone or mobile phone or the like.

The real time communication comprises a peripheral device. The peripheral device may be a headset or speakerphone.

The real time communication comprises a connection component of the first computing device for connecting the first computing device and the peripheral device. The connection component may be a USB (Universal Serial Bus) port or BT (Bluetooth) transmitter. Thus the connection between the first computing device and the peripheral device may be a wired connection or a wireless connection.

The real time communication comprises a software for the peripheral device installed on the first computing device. The software may be a local PC resource, a device driver, e.g. headset driver or speakerphone driver, a service or the like. A headset driver or device driver is a computer program that operates or controls the peripheral device, e.g. the headset or speakerphone, that is attached to the first computing device, e.g. the PC. A driver provides a software interface to hardware devices, enabling operating systems and other computer programs to access hardware functions without needing to know precise details of the hardware being used. The device driver communicates with the first computing device through the computer bus or communications subsystem to which the hardware connects. When a calling program invokes a routine in the device driver, the driver issues commands to the first computing device. Once the first computing device sends data back to the device driver, the device driver may invoke routines in the original calling program. Device drivers are hardware dependent and operating-system-specific. They usually provide the interrupt handling required for any necessary asynchronous time-dependent hardware interface.

The real time communication comprises first internet browser installed on the first computing device. The first internet browser is configured for providing content in the form of video, audio, and/or data. Thus the content provided by the first internet browser may be music, internet radio, video, such as youtube^{®} video, and/or calls, such as internet calls, such as real time communication calls, between two or more users.

The real time communication comprises an external computing system in communication with the first internet browser and with the software. The external computing system may be a server, a cloud, such as cloud server etc.

The real time communication comprises a user interface of the peripheral device for generating control signals for controlling one or more functionalities in the first internet browser. The user interface or human-machine interface is the part of the system that handles the human-machine interaction to allow effective operation and control of the system by the user.

The user interface is of the peripheral device. As the peripheral device may be a headset or a speakerphone, the user interface may be headset user interface or a speakerphone user interface.

Thus the user interface may be a headset interface, e.g. on the headset itself or on an inline headset controller, e.g. buttons on the headset interface. The user interface may be a separate electronic device, e.g. a remote control for the headset or a remote control for the speakerphone.

The user interface may be a voice user interface, which accept input and provide output by generating voice prompts. The user input is made by pressing keys or buttons, or responding verbally to the interface.

The user interface may be a Graphical user interface (GUI) which accepts input via devices such as a computer keyboard and mouse and provide articulated graphical output on a computer monitor.

The user interface may be a touchscreen which is a display that accepts input by touch of fingers or a stylus.

The user interface may be a gesture interface being a graphical user interface which accepts input in a form of hand gestures, or mouse gestures sketched with a computer mouse or a stylus.

The user interface may be a non-command user interface, which observe the user to infer his / her needs and intentions, without requiring that he / she formulate explicit commands.

The user interface may be a tangible user interface, which places a greater emphasis on touch and physical environment or its element.

The user interface may be a touch user interface being a graphical user interface using a touchpad or touchscreen display as a combined input and output device.

The user interface may be a hardware interface being the physical, spatial interfaces on e.g. the headset itself, on an in-line headset controller etc. The hardware user interface may be a mixture of knobs, buttons, sliders, switches, and touchscreens.

The user interface may be an attentive user interface managing the user attention by deciding when to interrupt the user, the kind of warnings, and the level of detail of the messages presented to the user.

The user interface of the peripheral device is for generating control signals for controlling one or more functionalities in the first internet browser. Thus the user interface of the peripheral device is configured for generating control signals. The control signals are configured for controlling one or more functionalities of the first internet browser.

The control signals are transmitted via the connection component, via the software, via the external computing system to the first internet browser thereby enabling control of the one or more functionalities in the first internet browser, when the first internet browser is providing content. Thus the control signals are configured to be transmitted via the connection component, via the software, via the external computing system to the first internet browser thereby. The control signals are configured for enabling control of the one or more functionalities in the first internet browser.

The one or more functionalities in the first internet browser may be to accept incoming calls, reject incoming calls, initiate calls, mute microphone, unmute microphone, adjust volume up, adjust volume down. These functionalities in the first internet browser may be in sessions such as a communications session e.g. a call with one or more other users, and/or it may be when the user is watching video, listening to audio, and/or is exchanging data, such as transmitting or receiving data via the first internet browser, e.g. exchanging data with one or more other users, e.g. using one or more other internet browsers etc.

Thus the sessions may be communications sessions where the user (the first user) of the first internet browser is communicating, such as performing a call, e.g. a telephone call, with a second user of a second internet browser, via a real time telecommunication. The functionalities in the first internet browser may then be to accept incoming calls, reject incoming calls, initiate calls, mute/unmute the microphone of the peripheral device, e.g. the headset microphone or the speakerphone microphone, adjust volume up/down in a speaker of the peripheral device, such as the speaker or earphone of the headset or of the speakerphone.

The sessions may be video sessions, audio sessions or data sessions where the user (the first user) of the first internet browser is not communicating with a second user of a second internet browser, but is e.g. watching video or listening to music on the internet. The functionalities in the first internet browser may then be to adjust volume up/down in a speaker of the peripheral device, such as the speaker or earphone of the headset, such that the audio of the video which the user is watching in the first internet browser or the music is adjusted in volume up and/or down.

The control signals for controlling one or more functionalities in the first internet browser may be to request to accept an incoming call, to request to reject an incoming call, to request to initiate a call, to request to mute microphone, to request to unmute microphone, to request to adjust the volume up, to request to adjust the volume down.

The real time communication system may be for controlling peer-to-peer (P2P) computing or networking which is a distributed application architecture that partitions tasks or workloads between peers. Peers are equally privileged, equipotent participants in the application. They are said to form a peer-to-peer network of nodes. Peers make a portion of their resources, such as processing power, disk storage or network bandwidth, directly available to other network participants, without the need for central coordination by servers or stable hosts. Peers are both suppliers and consumers of resources, in contrast to the traditional client-server model in which the consumption and supply of resources is divided.

The external computing program, e.g. server or cloud server, of the real time communication system may comprise an electronic hook switch (EHS) service. An electronic hook switch (EHS) is a device which electronically connects a wireless headset and phone. The EHS passes predefined signaling. Either Bluetooth (BT) headset or DECT headset can be used. Users can handle calls with the headset only, freeing them from remaining next to the phone. Switching from handset to headset is typically accomplished by pushing a specific button. Features of the EHS may comprise:
- Answer call: enables the user to answer a call from the headset.
- End call: enables the user to hang up a call from the headset.
- Ringtone in headset: headset plays a ringtone when the phone receives a call.
- Volume control: enables the user to control volume from headset.
- Mute control: enables the user to toggle mute between on and off.

In some embodiments the first internet browser is configured for providing video communication sessions, audio communication sessions and/or data communication sessions.

In some embodiments the first internet browser is configured to provide the communication session with a second internet browser, where the second internet browser is installed on a second computing device, where the communication session is via an internet connection. The communication session may be a call, such as telecommunications call, such as a call via a browser, such as using a softphone, such as using a WebRTC softphone.

In some embodiments wherein the one or more functionalities comprise to accept incoming call, reject incoming call, initiate call, end call, mute microphone, unmute microphone, mute speaker, unmute speaker, adjust speaker volume up, and/or adjust speaker volume down.

In some embodiments the real-time communication is based on the WebRTC standard.

In some embodiments the peripheral device is a headset or a speakerphone.

In some embodiments the user interface is a headset user interface, such as buttons on a headset base and/or an inline headset controller and/or buttons on the headset.

In some embodiments the user interface is a separate control device, such as a remote control; and/or speakerphone user interface, such as buttons on the speakerphone; and/or an electronic device, such as a tablet or a smart phone.

In some embodiments the connection component of the first computing device is a USB port and/or a Bluetooth transceiver for providing wired and/or wireless connection for connecting the first computing device and the peripheral device.

In some embodiments the connection component is connected to the first internet browser with an audio channel, whereby audio is configured to be directed between the first internet browser and the peripheral device. Thus the user may receive audio from the first internet browser in the speaker of the peripheral device, such as in the earphones of the headset.

In some embodiments the software for the peripheral device installed on the first computing device is a device driver and/or a service, such as a headset driver or speakerphone driver.

The external computing system is a cloud server, and/or a local server.

According to an aspect disclosed is a real-time communication system (21) for controlling peer-to-peer video, audio, and data communication sessions between a first Internet browser (3) installed on a first computing device (1) and a second Internet browser (20) installed on a second computing device (12). Audio, video, and data communication are exchanged via a first Internet channel (13, 6, 14). The system provides a cloud service (7) that enables control of communication sessions via control signals sent from at least the first computing devices (1) via a first cloud connection channel (16, 17, 15), which in parallel with the first Internet channel (13, 6, 14) connects the first computing device (1) with the cloud service (7).

In some embodiments the real-time communication is based on the WebRTC standard.

In some embodiments the control signals comprise at least one of the following signals: accept incoming call, reject incoming call, volume up, volume down, mute microphone, unmute microphone.

The present invention relates to different aspects including the system described above and in the following, and corresponding system parts, methods, devices, systems, networks, kits, uses and/or product means, each yielding one or more of the benefits and advantages described in connection with the first mentioned aspect, and each having one or more embodiments corresponding to the embodiments described in connection with the first mentioned aspect and/or disclosed in the appended claims.

### BRIEF DESCRIPTION OF THE DRAWINGS

The above and other features and advantages will become readily apparent to those skilled in the art by the following detailed description of exemplary embodiments thereof with reference to the attached drawings, in which:
Fig. 1 schematically illustrates an example of a real-time communication system.
Fig. 2 schematically illustrates an example of a real-time communication system for enabling a call between a first user and a second user.
Fig. 3 schematically illustrates an example of a user wearing a peripheral device, e.g. a headset.
Fig. 4 schematically illustrates an example of a user wearing a peripheral device, e.g. a headset.
Fig. 5 schematically illustrates an example of a user next to a peripheral device, e.g. a speakerphone.
Fig. 6 schematically illustrates the one or more functionalities to be controlled.
Fig. 7 schematically illustrates a method for real-time communication in a system.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

Throughout, the same reference numerals are used for identical or corresponding parts.

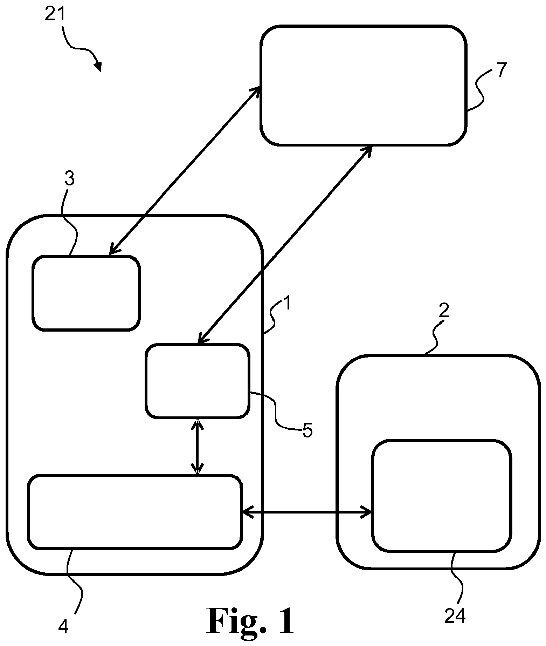

Fig. 1 schematically illustrates an example of a real-time communication system 21. The system 21 comprises a first computing device 1, for example a pc of a first user. The system 21 comprises a peripheral device 2, for example a headset or a speakerphone. The system 21 comprises a connection component 4, for example a wired UBS port or a wireless Bluetooth transceiver, of the first computing device 1 for connecting the first computing device 1 and the peripheral device 2. The system 21 comprises a software 5, for example a device driver such as a headset driver or a speakerphone driver, for the peripheral device 2 installed on the first computing device 1. The system 21 comprises first internet browser 3, for example Google, Firefox, Safari, installed on the first computing device 1. The first internet browser 3 is configured for providing content in the form of video, audio, and/or data, for example video from Youtube ^{®}, audio from radio or a music application, or a call with another user. The system 21 comprises an external computing system 7, e.g. a server or a cloud, in communication with the first internet browser 3 and with the software 5. The system 21 comprises a user interface 24, for example a headset user interface such as a headset base, buttons on the earphone of a headset, an in-line headset controller, or a speakerphone user interface, of the peripheral device 2 for generating control signals for controlling one or more functionalities in the first internet browser 3. The control signals are configured to be transmitted via the connection component 4, via the software 5, via the external computing system 7 to the first internet browser 3 thereby enabling control of the one or more functionalities in the first internet browser 3.

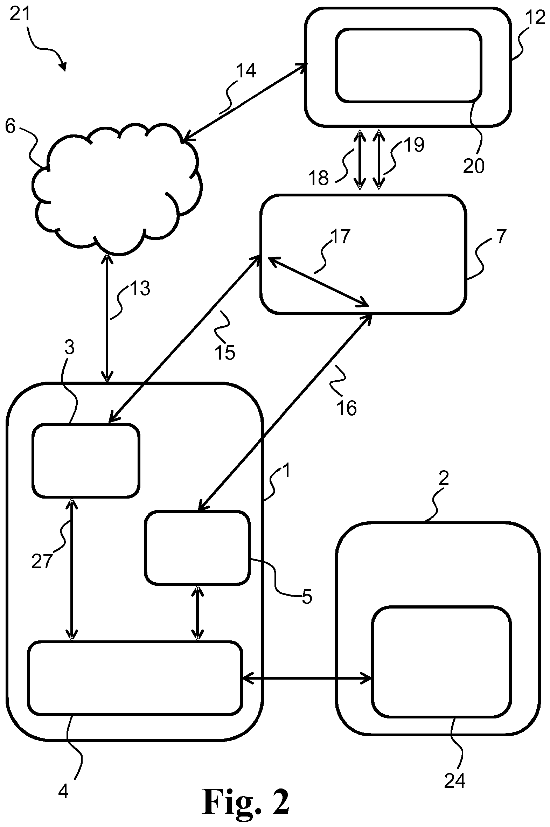

Fig. 2 schematically illustrates an example of a real-time communication system 21 for enabling a call between a first user and a second user. The system 21 comprises a first computing device 1, for example a pc of a first user. The system 21 comprises a peripheral device 2, for example a headset or a speakerphone. The system 21 comprises a connection component 4, for example a wired UBS port or a wireless Bluetooth transceiver, of the first computing device 1 for connecting the first computing device 1 and the peripheral device 2. The system 21 comprises a software 5, for example a device driver such as a headset driver or a speakerphone driver, for the peripheral device 2 installed on the first computing device 1. The system 21 comprises first internet browser 3, for example Google, Firefox, Safari, installed on the first computing device 1. The first internet browser 3 is configured for providing content in the form of video, audio, and/or data, for example video from Youtube ^{®}, audio from radio or a music application, or a call with another user. The system 21 comprises an external computing system 7, e.g. a server or a cloud, in communication with the first internet browser 3 and with the software 5. The system 21 comprises a user interface 24, for example a headset user interface such as a headset base, buttons on the earphone of a headset, an in-line headset controller, or a speakerphone user interface, of the peripheral device 2 for generating control signals for controlling one or more functionalities in the first internet browser 3. The control signals are configured to be transmitted via the connection component 4, via the software 5, via the external computing system 7 to the first internet browser 3 thereby enabling control of the one or more functionalities in the first internet browser 3.

The connection component 4 is connected to the first internet browser 3 with an audio channel 27, whereby audio is configured to be directed between the first internet browser 3 and the peripheral device 2. The audio may be audio in calls, audio from radio or music, audio from video etc.

The first internet browser 3 is configured for providing video communication sessions, audio communication sessions and/or data communication sessions.

The first internet browser 3 is configured to provide the communication session with a second internet browser 20. The second internet browser 20 is installed on a second computing device 12, for example a pc of a second user, where the communication session is via an internet connection. The second user may also use a normal desk phone or a mobile phone.

The first internet browser 3 at the first user and the second internet browser 20 at the second user may connect to each other over the Internet 6 via a first internet connection 13 and a second internet connection 14.

The external computing system 7, e.g. server or cloud, may comprise an electronic hook switch (EHS) service, thus the external computing system 7 may be connected to the first internet browser 3 via a first EHS service connection 15, and the external computing system 7 may be connected to the software 5, e.g. device driver, via a second EHS service connection 16. In the external computing system 7 an EHS routing 17 may connect the first EHS service connection 15 and second EHS service connection 16.

The external computing system 7 may be connected to the second internet browser 20 via a third EHS service connection 18, and the external computing system 7 may be connected to a second software, e.g. device driver, of the second computing device 12, via a fourth EHS service connection 19. In the external computing system 7 an EHS routing (not shown) may connect the third EHS service connection 18 and fourth EHS service connection 19.

Thus the peripheral device 2 may be a headset which is connected to the connection component 4 for example being a USB port. The connection component 4 may be connected to the first Internet browser 3 with an audio channel 27, whereby audio can be directed between the first internet browser 3 and the headset 2. A software 5, e.g. headset driver, which is a very small and "lightweight" piece of software is installed on the first computing device 1, e.g. a PC. Control signals from the user interface 24, e.g. a headset interface, cannot be exchanged between the headset 2 and the first internet browser 3. However, the software 5, e.g. the headset driver, is an "open" web client which communicates with an external computing device 7, e.g. a cloud service, which via HTTPS (HTTP Secure) communicates with a WebRTC softphone in the first internet browser 3. Thus, the first user of the first computing device 1 can control the WebRTC softphone by means of the headset interface 24.

The headset 2 can alternatively and/or additionally be connected to the PC 1 by a Bluetooth connection. The invention can also be utilised by means of speakerphones 2 with a user interface 24.

A PC 1 is shown as computing device in the example. However, the invention can also be utilised by other computing devices 1, such as tablet computers and smart phones.

In a traditional Internet based communication system, a communication software, such as Skype^{®}, can be used for video chat and voice calls over the Internet. A first user may use a headset, that comprises a headband, two earphones, a microphone arm with a microphone, a headset cable with an inline headset controller and a USB plug. The USB plug may be plugged into a USB port of a first PC. The first PC is via a first Internet connection connected to the Internet. A second user with a second PC is in a similar way connected the Internet via a second Internet connection. Both PCs have Skype^{®} or similar softphone clients installed and thereby the users can communicate with each other. The headset controller comprises control buttons, which can be used to make calls, receive calls, end calls, adjust volume and mute the microphone. These control buttons control directly functions in the Skype^{®} software.

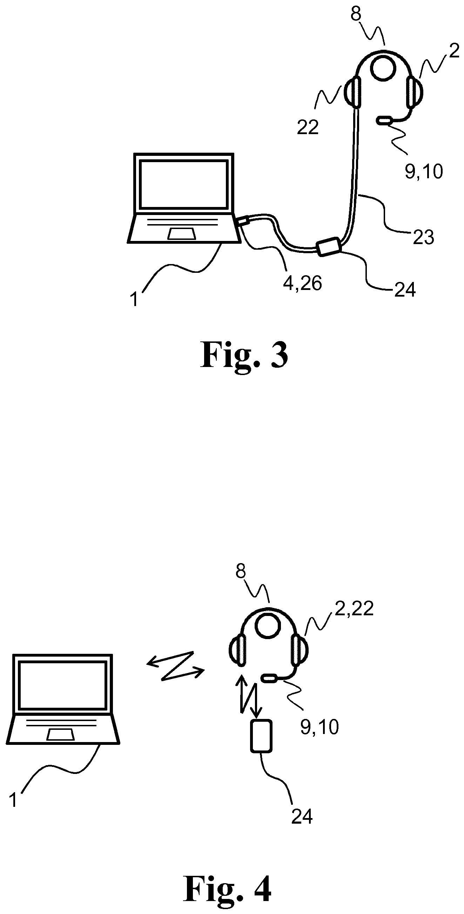

Fig. 3 schematically illustrates an example of a user 8 wearing a peripheral device 2, e.g. a headset. The headset 2 comprises earphones 22 and a microphone arm 9 with a microphone 10. The headset 2 is connected by a headset cable 23 to the first computing device 1, e.g. PC, through a USB plug 26 in the USB port 4 in the PC 1. The user 8 can control the functionalities on the user interface 24 which is an in-line headset controller in fig. 3.

Fig. 4 schematically illustrates an example of a user 8 wearing a peripheral device 2, e.g. a headset. The headset 2 comprises earphones 22 and a microphone arm 9 with a microphone 10. The headset 2 is wirelessly connected to the first computing device 1, e.g. PC, through e.g. a Bluetooth connection. The user 8 can control the functionalities on the user interface 24 which may be a smart phone or a remote headset controller in fig. 4. The headset 2 can be wirelessly connected directly with the PC 1 via a Bluetooth link X. The smartphone 24 is wirelessly connected to the headset 2 via another Bluetooth link X. Thus, the smartphone 24 may act as a controller of the headset 2. Alternatively, both the headset 2 and the smartphone 24 is connected via Bluetooth links to the PC 2.

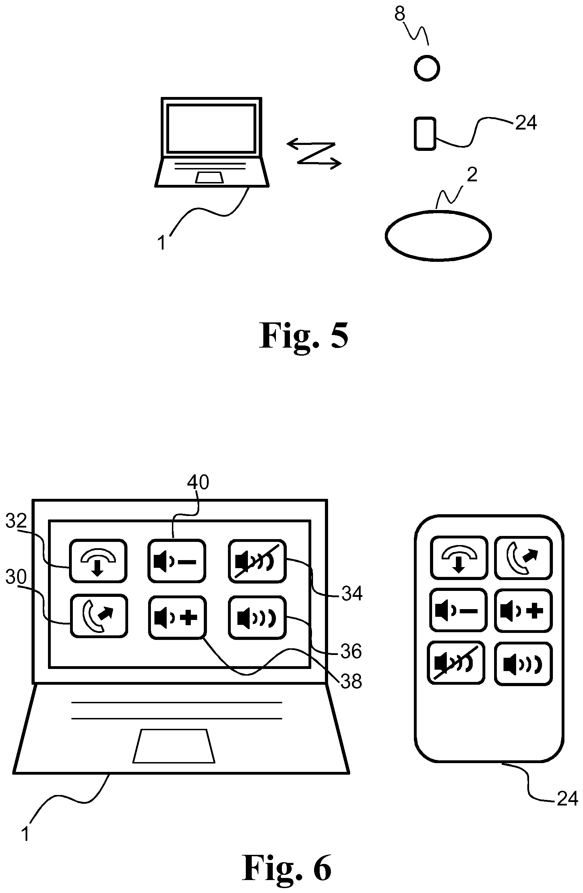

Fig. 5 schematically illustrates an example of a user 8 next to a peripheral device 2, e.g. a speakerphone. The speakerphone 2 comprises speaker(s) (not shown) and microphone(s) (not shown). The speakerphone 2 is wirelessly connected to the first computing device 1, e.g. PC, through e.g. a Bluetooth connection. The user 8 can control the functionalities on the user interface 24 which may be a smart phone or a remote headset controller in fig. 5. Alternatively and/or additionally, the user interface 24 may be incorporated in the speakerphone 2, thus the user 8 can control the functionalities directly on the user interface 24 of the speakerphone 2.

Fig. 6 schematically illustrates the one or more functionalities to be controlled. The functionalities may be displayed in the browser window on the first computing device 1, e.g. a pc, and/or on the user interface 24, e.g. a headset interface. The functionalities may comprise to accept incoming call 30, reject incoming call 32, initiate call 30, end call 32, mute microphone, unmute microphone, mute speaker 34, unmute speaker 36, adjust speaker volume up 38, and/or adjust speaker volume down 40.

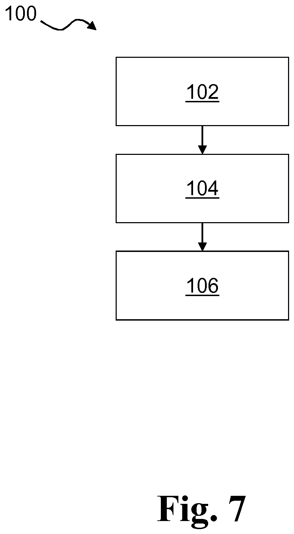

Fig. 7 schematically illustrates a method 100 for real-time communication in a system. The system comprises: a first computing device; a peripheral device; a connection component of the first computing device for connecting the first computing device and the peripheral device; a software for the peripheral device installed on the first computing device; first internet browser installed on the first computing device, the first internet browser being configured for providing content in the form of video, audio, and/or data; an external computing system in communication with the first internet browser and with the software; and a user interface of the peripheral device. The method (100) comprises:

In step 102 generating control signals in the user interface for controlling one or more functionalities in the first internet browser.

In step 104 the control signals are transmitted via the connection component, via the software, via the external computing system to the first internet browser.

In step 106 control of the one or more functionalities in the first internet browser is thereby enabled.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is solely defined by the appended claims.

### LIST OF REFERENCES

1 first computing device, e.g. PC
2 peripheral device, e.g. headset or speakerphone
3 first internet browser
4 connection component, e.g. USB interface or BT interface
5 software, e.g. device driver such as headset driver
6 Internet
7 external computing system, e.g. server or cloud
8 first user
9 microphone arm of headset
10 microphone og headset
11 second user
12 second computing device, e.g. PC
13 first Internet connection
14 second Internet connection
15 first EHS Service connection
16 second EHS Service connection
17 EHS routing
18 third EHS Service connection
19 fourth EHS Service connection
20 second Internet browser
21 real-time communication system
22 earphone(s) of headset
23 headset cable
24 user interface, e.g. headset controller
26 USB plug
27 audio channel
30 functionality to accept incoming call / initiate call
32 functionality to reject incoming call / end call
34 functionality to mute speaker
36 functionality to unmute speaker
38 functionality to adjust speaker volume up
40 functionality to adjust speaker volume down

## Claims

1. A real-time communication system (21) comprising:
- a first computing device (1);
- a peripheral device (2);
- a connection component (4) of the first computing device (1) for connecting the first computing device (1) and the peripheral device (2);
- a software (5) for the peripheral device (2) installed on the first computing device (1);
- first internet browser (3) installed on the first computing device (1), the first internet browser being configured for providing content in the form of video, audio, and/or data;
- an external computing system (7) in communication with the first internet browser (3) and with the software (5);
**characterized in that** the external computing system (7) is a cloud server connecting the first internet browser (3) and the software (5) on the first computing device (1);
the real-time communication system (21) further comprising:
- a user interface (24) of the peripheral device (2) for generating control signals for controlling one or more functionalities in the first internet browser, the control signals being transmitted via the connection component (4), via the software (5), via the external computing system (7) to the first internet browser (3) thereby enabling control of the one or more functionalities in the first internet browser (3);
wherein control signals from the user interface (24) cannot be exchanged between the peripheral device (2) and the first internet browser (3) due to security limitations of the first internet browser (3).

2. The real-time communication system (21) according to any of the preceding claims, wherein the first internet browser is configured for providing video communication sessions, audio communication sessions and/or data communication sessions.

3. The real-time communication system (21) according to any of the preceding claims, wherein the first internet browser is configured to provide the communication session with a second internet browser (20), the second internet browser being installed on a second computing device (12), where the communication session is via an internet connection.

4. The real-time communication system (21) according to any of the preceding claims, wherein the one or more functionalities comprise to accept incoming call, reject incoming call, initiate call, end call, mute microphone, unmute microphone, mute speaker, unmute speaker, adjust speaker volume up, and/or adjust speaker volume down.

5. A real-time communication system (21) according to any of the preceding claims, wherein the real-time communication is based on the WebRTC standard.

6. A real-time communication system (21) according to any of the preceding claims, wherein the peripheral device is a headset or a speakerphone.

7. A real-time communication system (21) according to any of the preceding claims, wherein the user interface (24) is a headset user interface, such as buttons on a headset base and/or an inline headset controller and/or buttons on the headset.

8. A real-time communication system (21) according to any of the preceding claims, wherein the user interface (24) is a separate control device, such as a remote control; and/or speakerphone user interface, such as buttons on the speakerphone; and/or an electronic device, such as a tablet or a smart phone.

9. A real-time communication system (21) according to any of the preceding claims, wherein the connection component (4) of the first computing device (1) is a USB port and/or a Bluetooth transceiver for providing wired and/or wireless connection for connecting the first computing device (1) and the peripheral device (2).

10. A real-time communication system (21) according to any of the preceding claims, wherein the connection component (4) is connected to the first internet browser (3) with an audio channel (27), whereby audio is configured to be directed between the first internet browser (3) and the peripheral device (2).

11. A real-time communication system (21) according to any of the preceding claims, wherein the software (5) for the peripheral device (2) installed on the first computing device (1) is a device driver and/or a service, such as a headset driver or speakerphone driver.

12. A real-time communication system (21) according to any of the preceding claims, wherein the external computing system (7) is a cloud server and a local server.

13. A method (100) for real-time communication in a system (21),
the system (21) comprising: a first computing device (1); a peripheral device (2); a connection component (4) of the first computing device (1) for connecting the first computing device (1) and the peripheral device (2); a software (5) for the peripheral device (2) installed on the first computing device (1); first internet browser (3) installed on the first computing device (1), the first internet browser (3) being configured for providing content in the form of video, audio, and/or data; an external computing system (7) in communication with the first internet browser (3) and with the software (5); and a user interface (24) of the peripheral device (2); the method being **characterized in** the following method steps: wherein the external computing system (7) is a cloud server connecting the first internet browser (3) and the software (5) on the first computing device (1);
wherein the method (100) comprises generating (102) control signals in the user interface (3) for controlling one or more functionalities in the first internet browser (3), the control signals being transmitted (104) via the connection component (4), via the software (5), via the external computing system (7) to the first internet browser (3) thereby enabling (106) control of the one or more functionalities in the first internet browser (3);
wherein control signals from the user interface (24) cannot be exchanged between the peripheral device (2) and the first internet browser (3) due to security limitations of the first internet browser (3).

## Patentansprüche

1. Ein Echtzeitkommunikationssystem (21), umfassend:
- ein erstes Computergerät (1);
- ein Peripheriegerät (2);
- eine Verbindungskomponente (4) des ersten Computergeräts (1) zum Verbinden des ersten Computergeräts (1) und des Peripheriegeräts (2);
- eine Software (5) für das Peripheriegerät (2), die auf dem ersten Computergerät (1) installiert ist;
- einen ersten Internetbrowser (3), der auf dem ersten Computergerät (1) installiert ist, wobei der erste Internetbrowser zum Bereitstellen von Inhalten in Form von Video, Audio und/oder Daten konfiguriert ist;
- ein externes Computersystem (7), das mit dem ersten Internetbrowser (3) und mit der Software (5) in Verbindung steht;
**dadurch gekennzeichnet, dass** das externe Computersystem (7) ein Cloud-Server ist, der den ersten Internetbrowser (3) und die Software (5) auf dem ersten Computergerät (1) verbindet;
wobei das Echtzeitkommunikationssystem (21) ferner umfasst:
- eine Benutzerschnittstelle (24) des Peripheriegeräts (2) zum Erzeugen von Steuersignalen zum Steuern einer oder mehrerer Funktionalitäten im ersten Internetbrowser, wobei die Steuersignale über die Verbindungskomponente (4), über die Software (5), über das externe Computersystem (7) an den ersten Internetbrowser (3) übertragen werden und dadurch die Steuerung der einen oder mehreren Funktionalitäten im ersten Internetbrowser (3) ermöglichen;
wobei Steuersignale von der Benutzerschnittstelle (24) aufgrund von Sicherheitsbeschränkungen des ersten Internetbrowsers (3) nicht zwischen dem Peripheriegerät (2) und dem ersten Internetbrowser (3) ausgetauscht werden können.

2. Das Echtzeitkommunikationssystem (21) gemäß einem der vorhergehenden Ansprüche, wobei der erste Internetbrowser zum Bereitstellen von Videokommunikationssitzungen, Audiokommunikationssitzungen und/oder Datenkommunikationssitzungen konfiguriert ist.

3. Das Echtzeitkommunikationssystem (21) gemäß einem der vorhergehenden Ansprüche, wobei der erste Internetbrowser so konfiguriert ist, dass er die Kommunikationssitzung mit einem zweiten Internetbrowser (20) bereitstellt, wobei der zweite Internetbrowser auf einem zweiten Computergerät (12) installiert ist, wobei die Kommunikationssitzung über eine Internetverbindung abgewickelt wird.

4. Das Echtzeitkommunikationssystem (21) gemäß einem der vorhergehenden Ansprüche, wobei die eine oder mehrere Funktionalitäten Folgendes umfassen: Annehmen eines eingehenden Anrufs, Ablehnen eines eingehenden Anrufs, Anruf einleiten, Anruf beenden, Mikrofon stummschalten, Mikrofonstummschalten, Lautsprecher stummschalten, Lautsprecherstummschalten, Lautsprecherlautstärke erhöhen und/oder Lautsprecherlautstärke verringern.

5. Ein Echtzeitkommunikationssystem (21) gemäß einem der vorhergehenden Ansprüche, wobei die Echtzeitkommunikation auf dem WebRTC-Standard basiert.

6. Ein Echtzeitkommunikationssystem (21) gemäß einem der vorhergehenden Ansprüche, wobei das Peripheriegerät ein Headset oder eine Freisprecheinrichtung ist.

7. Ein Echtzeitkommunikationssystem (21) gemäß einem der vorhergehenden Ansprüche, wobei die Benutzerschnittstelle (24) eine Headset-Benutzerschnittstelle ist, wie etwa Tasten an einer Headset-Basis und/oder ein Inline-Headset-Controller und/oder Tasten am Headset.

8. Ein Echtzeitkommunikationssystem (21) gemäß einem der vorhergehenden Ansprüche, wobei die Benutzerschnittstelle (24) ein separates Steuergerät ist, wie etwa eine Fernbedienung; und/oder eine Freisprecheinrichtungs-Benutzerschnittstelle, wie etwa Tasten an der Freisprecheinrichtung; und/oder ein elektronisches Gerät, wie etwa ein Tablet oder ein Smartphone.

9. Echtzeitkommunikationssystem (21) nach einem der vorhergehenden Ansprüche, wobei die Verbindungskomponente (4) des ersten Computergeräts (1) ein USB-Anschluss und/oder ein Bluetooth-Transceiver zum Bereitstellen einer drahtgebundenen und/oder drahtlosen Verbindung zum Verbinden des ersten Computergeräts (1) und des Peripheriegeräts (2) ist.

10. Echtzeitkommunikationssystem (21) nach einem der vorhergehenden Ansprüche, wobei die Verbindungskomponente (4) mit dem ersten Internetbrowser (3) über einen Audiokanal (27) verbunden ist, wobei Audio so konfiguriert ist, dass es zwischen dem ersten Internetbrowser (3) und dem Peripheriegerät (2) geleitet wird.

11. Echtzeitkommunikationssystem (21) nach einem der vorhergehenden Ansprüche, wobei die auf dem ersten Computergerät (1) installierte Software (5) für das Peripheriegerät (2) ein Gerätetreiber und/oder ein Dienst ist, wie etwa ein Headset-Treiber oder ein Freisprechtreiber.

12. Echtzeitkommunikationssystem (21) nach einem der vorhergehenden Ansprüche, wobei das externe Computersystem (7) ein Cloud-Server und ein lokaler Server ist.

13. Verfahren (100) zur Echtzeitkommunikation in einem System (21),
wobei das System (21) umfasst: ein erstes Computergerät (1); ein Peripheriegerät (2); eine Verbindungskomponente (4) des ersten Computergeräts (1) zum Verbinden des ersten Computergeräts (1) und des Peripheriegeräts (2); eine auf dem ersten Computergerät (1) installierte Software (5) für das Peripheriegerät (2); einen auf dem ersten Computergerät (1) installierten ersten Internetbrowser (3), wobei der erste Internetbrowser (3) zum Bereitstellen von Inhalten in Form von Video, Audio und/oder Daten konfiguriert ist; ein externes Computersystem (7), das mit dem ersten Internetbrowser (3) und mit der Software (5) kommuniziert; und eine Benutzerschnittstelle (24) des Peripheriegeräts (2); wobei das Verfahren durch die folgenden Verfahrensschritte gekennzeichnet ist: wobei das externe Computersystem (7) ein Cloud-Server ist, der den ersten Internetbrowser (3) und die Software (5) auf dem ersten Computergerät (1) verbindet;
wobei das Verfahren (100) das Erzeugen (102) von Steuersignalen in der Benutzerschnittstelle (3) zum Steuern einer oder mehrerer Funktionalitäten im ersten Internetbrowser (3) umfasst, wobei die Steuersignale über die Verbindungskomponente (4), über die Software (5), über das externe Computersystem (7) an den ersten Internetbrowser (3) übertragen (104) werden und dadurch die Steuerung der einen oder mehrerer Funktionalitäten im ersten Internetbrowser (3) ermöglichen (106);
wobei Steuersignale von der Benutzerschnittstelle (24) aufgrund von Sicherheitsbeschränkungen des ersten Internetbrowsers (3) nicht zwischen dem Peripheriegerät (2) und dem ersten Internetbrowser (3) ausgetauscht werden können.

## Revendications

1. Système de communication en temps réel (21) comprenant :
- un premier dispositif informatique (1) ;
- un périphérique (2) ;
- un composant de connexion (4) du premier dispositif informatique (1) pour connecter le premier dispositif informatique (1) et le dispositif périphérique (2) ;
- un logiciel (5) pour le dispositif périphérique (2) installé sur le premier dispositif informatique (1) ;
- un premier navigateur Internet (3) installé sur le premier dispositif informatique (1), le premier navigateur Internet étant configuré pour fournir un contenu sous forme de vidéo, d'audio et/ou de données ;
- un système informatique externe (7) en communication avec le premier navigateur Internet (3) et avec le logiciel (5) ;
**caractérisé en ce que** le système informatique externe (7) est un serveur cloud connectant le premier navigateur Internet (3) et le logiciel (5) sur le premier dispositif informatique (1) ;
le système de communication en temps réel (21) comprenant en outre :
- une interface utilisateur (24) du périphérique (2) pour générer des signaux de commande pour contrôler une ou plusieurs fonctionnalités dans le premier navigateur internet, les signaux de commande étant transmis via le composant de connexion (4), via le logiciel (5), via le système informatique externe (7) vers le premier navigateur Internet (3), permettant ainsi de contrôler la ou les fonctionnalités du premier navigateur Internet (3) ;
dans lequel des signaux de commande provenant de l'interface utilisateur (24) ne peuvent pas être échangés entre le dispositif périphérique (2) et le premier navigateur Internet (3) en raison des limitations de sécurité du premier navigateur Internet (3).

2. Système de communication en temps réel (21) selon l'une quelconque des revendications précédentes, dans lequel le premier navigateur Internet est configuré pour fournir des sessions de communication vidéo, des sessions de communication audio et/ou des sessions de communication de données.

3. Système de communication en temps réel (21) selon l'une quelconque des revendications précédentes, dans lequel le premier navigateur Internet est configuré pour assurer la session de communication avec un deuxième navigateur Internet (20), le deuxième navigateur Internet étant installé sur un deuxième ordinateur, dispositif (12), où la session de communication s'effectue via une connexion Internet.

4. Système de communication en temps réel (21) selon l'une quelconque des revendications précédentes, dans lequel la ou les fonctionnalités comprennent l'acceptation d'un appel entrant, le rejet d'un appel entrant, l'initiation d'un appel, la fin d'un appel, la mise en sourdine du microphone, la réactivation du microphone, la mise en sourdine du haut-parleur, réactiver le haut-parleur, augmenter le volume du haut-parleur et/ou diminuer le volume du haut-parleur.

5. Système de communication en temps réel (21) selon l'une quelconque des revendications précédentes, dans lequel la communication en temps réel est basée sur la norme WebRTC.

6. Système de communication en temps réel (21) selon l'une quelconque des revendications précédentes, dans lequel le dispositif périphérique est un casque ou un haut-parleur.

7. Système de communication en temps réel (21) selon l'une quelconque des revendications précédentes, dans lequel l'interface utilisateur (24) est une interface utilisateur de casque, telle que des boutons sur une base de casque et/ou un contrôleur de casque en ligne et/ou des boutons. sur le casque.

8. Système de communication en temps réel (21) selon l'une quelconque des revendications précédentes, dans lequel l'interface utilisateur (24) est un dispositif de commande séparé, tel qu'une télécommande ; et/ou une interface utilisateur de haut-parleur, telle que des boutons sur le haut-parleur ; et/ou un appareil électronique, tel qu'une tablette ou un téléphone intelligent.

9. Système de communication en temps réel (21) selon l'une quelconque des revendications précédentes, dans lequel le composant de connexion (4) du premier dispositif informatique (1) est un port USB et/ou un émetteur-récepteur Bluetooth pour fournir des connexions filaires et/ou connexion sans fil pour connecter le premier dispositif informatique (1) et le dispositif périphérique (2).

10. Système de communication en temps réel (21) selon l'une quelconque des revendications précédentes, dans lequel le composant de connexion (4) est connecté au premier navigateur Internet (3) avec un canal audio (27), grâce auquel l'audio est configuré pour être dirigé entre le premier navigateur Internet (3) et le dispositif périphérique (2).

11. Système de communication en temps réel (21) selon l'une quelconque des revendications précédentes, dans lequel le logiciel (5) pour le périphérique (2) installé sur le premier dispositif informatique (1) est un pilote de périphérique et/ou un service. , comme un pilote de casque ou un pilote de haut-parleur.

12. Système de communication en temps réel (21) selon l'une quelconque des revendications précédentes, dans lequel le système informatique externe (7) est un serveur cloud et un serveur local.

13. Procédé (100) de communication en temps réel dans un système (21),
le système (21) comprenant : un premier dispositif informatique (1) ; un dispositif périphérique (2) ; un composant de connexion (4) du premier dispositif informatique (1) pour connecter le premier dispositif informatique (1) et le dispositif périphérique (2) ; un logiciel (5) pour le dispositif périphérique (2) installé sur le premier dispositif informatique (1) ; un premier navigateur Internet (3) installé sur le premier dispositif informatique (1), le premier navigateur Internet (3) étant configuré pour fournir un contenu sous forme de vidéo, d'audio et/ou de données ; un système informatique externe (7) en communication avec le premier navigateur Internet (3) et avec le logiciel (5) ; et une interface utilisateur (24) du dispositif périphérique (2) ; le procédé étant **caractérisé par** les étapes de procédé suivantes : le système informatique externe (7) est un serveur cloud connectant le premier navigateur Internet (3) et le logiciel (5) sur le premier dispositif informatique (1) ;
le procédé (100) comprenant la génération (102) de signaux de commande dans l'interface utilisateur (3) pour contrôler une ou plusieurs fonctionnalités dans le premier navigateur Internet (3), les signaux de commande étant transmis (104) via le composant de connexion (4). , via le logiciel (5), via le système informatique externe (7) vers le premier navigateur Internet (3), permettant ainsi (106) le contrôle de la ou des fonctionnalités dans le premier navigateur Internet (3) ;
dans lequel des signaux de commande provenant de l'interface utilisateur (24) ne peuvent pas être échangés entre le dispositif périphérique (2) et le premier navigateur Internet (3) en raison des limitations de sécurité du premier navigateur Internet (3).
